(19) Europäisches Patentamt / European Patent Office / Office européen des brevets

(11) EP 4 230 693 B1

(12) **EUROPEAN PATENT SPECIFICATION**

(45) Date of publication and mention
of the grant of the patent:
**05.03.2025 Bulletin 2025/10**

(21) Application number: **23153596.4**

(22) Date of filing: **27.01.2023**

(51) International Patent Classification (IPC):
*C08L 7/00* *(2006.01)*   *B60C 1/00* *(2006.01)*
*C08L 9/00* *(2006.01)*

(52) Cooperative Patent Classification (CPC):
**C08L 7/00; B60C 1/0025; C08L 9/00;**
B60C 2013/006; B60C 2013/007

(54) **RUBBER COMPOSITION FOR SIDEWALL**

KAUTSCHUKZUSAMMENSETZUNG FÜR SEITENWAND

COMPOSITION DE CAOUTCHOUC POUR PAROI LATÉRALE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **17.02.2022   JP 2022023250
06.01.2023   JP 2023001265**

(43) Date of publication of application:
**23.08.2023   Bulletin 2023/34**

(73) Proprietor: **Sumitomo Rubber Industries, Ltd.
Kobe-shi, Hyogo 651-0072 (JP)**

(72) Inventor: **MORI, KENJI
Kobe-shi, Hyogo, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 0 905 189      EP-A1- 3 178 880
US-A1- 2004 230 002      US-A1- 2013 324 660**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a rubber composition for sidewall.

BACKGROUND OF THE INVENTION

In recent years, abrasion resistance of a tire has improved, and a period of use in the tire market has become longer, and therefore, there has been a growing demand for improving various performances such as deterioration resistance and crack growth resistance due to long-term damage or deterioration of the tire. Since the same rubber surface is used for a sidewall from the start of use of the tire to its abrasion life, there has been a growing demand for further improvement in durability, particularly crack growth resistance, of the rubber composition for sidewall. For example, JP 2018-109126 A discloses a rubber composition comprising silica having a large BET specific surface area for the purpose of improving durability of a sidewall of a tire. However, JP 2018-109126 A does not refer to durability during high-speed running, and there is still room for improvement in high-speed durability of a sidewall.

SUMMARY OF THE INVENTION

It is an object of the present invention to provide a rubber composition for sidewall having improved high-speed durability.
The present invention relates to a rubber composition below:

A rubber composition for sidewall, comprising a rubber component and a thermoplastic resin,
wherein the rubber component comprises a styrene-butadiene rubber and/or a butadiene rubber,
wherein an amount of a cis-1,4-bond butadiene unit in a total amount of the rubber component is 80.0% by mass or less, and
wherein a crack growth rate measured under a test condition satisfies at least one of
0.20 m/s or less in a case of 250% strain (constant strain) of a test piece when fixed, and
0.30 m/s or less in a case of 300% strain (constant strain) of a test piece when fixed,

The test condition:

Test piece: a pure shear specimen with a vertical side of 22.4 mm, a horizontal side of 150.0 mm, and a thickness of 1.0 mm;
Test method: a biaxial tensile test is performed on the test piece parallel to a longitudinal direction, and then the test piece is fixed, in which a 10.0 mm of cut is made parallel to a horizontal direction starting from a midpoint of the vertical side on one side of the test piece.

According to the present invention, the rubber composition for sidewall having improved high-speed durability is provided.

BRIEF DESCRIPTION OF THE DRAWINGS

FIG. 1 is a front view and a lateral view of a pure shear specimen.
FIG. 2 is a schematic partial cross-sectional view of a tire according to one embodiment of the present invention.

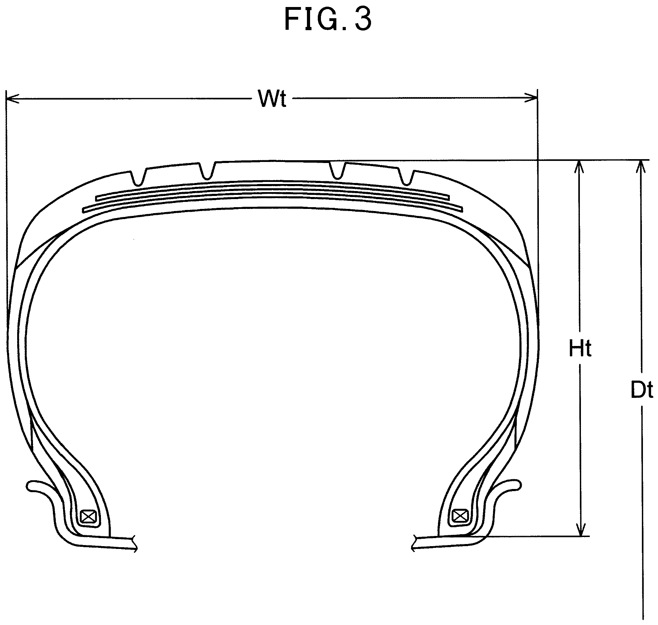

FIG. 3 is a cross-sectional view of the tire, showing a tire cross-sectional width Wt, a tire cross-sectional height Ht, and a tire outer diameter Dt.

DETAILED DESCRIPTION

The rubber composition for sidewall that is one embodiment of the present invention is a rubber composition for sidewall, comprising a rubber component and a thermoplastic resin, wherein the rubber component comprises a styrene-butadiene rubber and/or a butadiene rubber, wherein an amount of a cis-1,4-bond butadiene unit in a total amount of the rubber component is 80.0% by mass or less, wherein a total content $R_1$ (part by mass) of the thermoplastic resin based on 100 parts by mass of the rubber component is more than 10 parts by mass and less than 30 parts by mass, and wherein a crack growth rate measured under a test condition satisfies at least one of 0.20 m/s or less in a case of 250% strain (constant strain) of a test piece when fixed, and 0.30 m/s or less in a case of 300% strain (constant strain) of a test piece when fixed,

The test condition:

Test piece: pure shear specimen with a vertical side of 22.4 mm, a horizontal side of 150.0 mm, and a thickness of 1.0 mm;
Test method: a biaxial tensile test is performed on the test piece parallel to a longitudinal direction, and then the test piece is fixed, in which a 10.0 mm of cut is made parallel to a horizontal direction starting from a midpoint of the vertical side on one side of the test piece.

The rubber composition for sidewall comprises a rubber component comprising a styrene-butadiene rubber and/or a butadiene rubber and a thermoplastic resin, and a crack growth rate when measured with a cut being made is at a certain level or lower, so that a tire composed of the rubber composition for sidewall is remarkably improved in high-speed durability. The reason for that is not intended to be bound by theory, but is considered as follows.

The rubber composition of the present invention (1) comprises a styrene-butadiene rubber and/or a butadiene rubber and a thermoplastic resin, whereby the thermoplastic resin is dispersed in a butadiene rubber phase, and (2) energy of the rubber is improved, and an energy diffusion at a crack tip increases, so that (3) crack growth rate decreases. Then, with cooperation of (1) to (3), it is considered that a notable effect of dispersing the thermoplastic resin in a rubber phase to remarkably improve high-speed durability of the tire is achieved.

It is preferable that the rubber composition further comprises a filler and that the filler comprises silica.

When the rubber composition comprises a filler comprising silica, silica is further dispersed in the butadiene rubber phase, so that it is considered that strength of the butadiene rubber phase is reinforced to improve durability of the tire of the rubber composition.

A total content of the filler is preferably less than 50 parts by mass based on 100 parts by mass of the rubber component.

When the content of the filler is within the above-described range, the filler is sufficiently dispersed in the rubber component, and friction between fillers can be prevented from being generated, so that it is considered that the rubber composition is further improved in durability while ensuring fuel efficiency.

A tan $\delta$ at 70°C of the rubber composition is preferably 0.15 or less.

When the tan $\delta$ at 70°C is within the above-described range, it is considered that deformation of a side part generated by heat generation during running can be suppressed and that fuel efficiency is improved.

A total content $R_1$ (part by mass) of the thermoplastic resin based on 100 parts by mass of the rubber component is more than 10 parts by mass and less than 30 parts by mass.

When the total content $R_1$ of the thermoplastic resin is within the above-described range, the thermoplastic resin is more easily dispersed in the butadiene rubber phase, and they become compatible with each other, so that it is considered that a tan $\delta$ of a glass transition point is improved from the vicinity of 0°C, improving durability at high speed.

A total styrene amount S (% by mass) of the rubber component is preferably less than 15% by mass.

When the total styrene amount is within the above-described range, the thermoplastic resin is more easily dispersed in the butadiene rubber phase, and they become compatible with each other, so that it is considered that the tan $\delta$ of the glass transition point is improved from the vicinity of 0°C, improving durability at high speed.

It is preferable that the rubber component further comprises an isoprene-based rubber.

When the rubber component comprises an isoprene-based rubber, it is considered that crack growth resistance can be further improved.

The thermoplastic resin preferably comprises at least one or more selected from a group consisting of a terpene resin and a petroleum resin.

The terpene resin and/or the petroleum resin have a good dispersibility in a rubber, and therefore, when the thermoplastic resin comprises the terpene resin and/or the petroleum resin, they become compatible with the rubber component, so that it is considered that the tan $\delta$ of the glass transition point is improved from the vicinity of 0°C, further improving high-speed durability.

It is preferable that the rubber composition further comprises a thermosetting resin.

When the rubber composition further comprises a thermosetting resin, a hard substance becomes present in the rubber, inhibiting crack growth of the rubber, so that it is considered that high-speed durability is further improved.

When a total content (part by mass) of the thermosetting resin based on 100 parts by mass of the rubber component is defined as $R_2$, a ratio $R_2/R_1$ of the $R_2$ to the $R_1$ is preferably 0.20 or more and 0.50 or less.

When $R_2/R_1$ is within the above-described range, an excessive increase in hardness of the rubber is suppressed, and an excessive decrease in fracture resistance of the rubber due to presence of a foreign substance, so that it is considered that high-speed durability is further improved.

When a thickness of a surface rubber layer at a tire maximum width position is defined as T (mm), $R_1/T$ is preferably 3.0 or more and 9.0 or less.

When $R_1/T$ is within the above-described range, a certain amount of the thermoplastic resin is present even when the sidewall is thin, and therefore, the thermoplastic resin becomes more easily dispersed in a styrene-butadiene rubber phase, and they become compatible with each other, so that it is considered that the tan $\delta$ of the glass transition point is improved from the vicinity of 0°C, further improving high-speed durability.

A ratio S/T of the total styrene amount S of the rubber component to the thickness T of the surface rubber layer is preferably 1.0 or more and 9.0 or less.

When S/T is within the above-described range, a certain amount of a styrene domain is present even when the sidewall is thin, and therefore, the thermoplastic resin becomes dispersed in the styrene-butadiene rubber phase, energy of the rubber is improved, and the energy diffusion at the crack tip increases, so that it is considered that high-speed durability is further improved.

A ratio $(G/W_L)$ of a tire weight G (kg) to the maximum load capacity $W_L$ (kg) of the tire is preferably 0.0210 or less.

By setting $G/W_L$ within the above-described range and reducing the tire weight with respect to the maximum load capacity of the tire, influence by the tire weight is reduced even in a state where a load due to loading or riding is applied, impact on the entire tire can be reduced, and deformation of the sidewall can be reduced, so that it is considered that durability of the tire can be improved.

<Definition>

The "crack growth rate when the rubber composition is fixed and a cut is made" is a value calculated by crack growth distance/crack observation time. The measuring method will be described later.

The crack growth distance is a constant distance that the crack tip travels after reaching an observation point of the test piece, and it can be, for example, 100 mm.

The crack observation time is a time from when the crack tip reaches the observation point of the test piece to the crack growth distance.

A "standardized rim" is a rim defined for each tire in a standard system including a standard, on which the tire is based, by the standard, i.e., a "standard rim" in JATMA, "Design Rim" in TRA, or "Measuring Rim" in ETRTO. Besides, if a size of the tire is not specified in the above-described standard system, the standardized rim is a rim which can be assembled to the tire and whose width is narrowest among rims having the smallest diameter that does not cause air leakage between the rim and the tire.

A "standardized internal pressure" is an air pressure defined for each tire in a standard system including a standard on, which the tire is based, by the standard, i.e., a "MAXIMUM AIR PRESSURE" in JATMA, a maximum value described in Table "TIRE LOAD LIMITS AT VARIOUS COLD INFLATION PRESSURES" in TRA, or "INFLATION PRESSURE" in ETRTO. Besides, if a size of the tire is not specified in the above-described standard system, the standardized internal pressure shall be 250 kPa.

A "standardized state" is a state where the tire is rim-assembled on a standardized rim, a standardized internal pressure is filled, and no load is applied. Besides, in a case of a tire having a size not specified in the above-described standard system, the standardized state is a state where the tire is rim-assembled on the minimum rim, 250 kPa is filled, and no load is applied.

The "total styrene amount (S) in the rubber component" is a total content (% by mass) of styrene parts comprised in 100% by mass of the rubber component and is calculated by $\Sigma$ (styrene content of each styrene-containing rubber (% by mass)) $\times$ content in rubber component of each styrene-containing rubber (% by mass)/100). For example, when the rubber component is composed of 30% by mass of a first SBR (25% by mass of styrene content), 60% by mass of a second SBR (27.5% by mass of styrene content), and 10% by mass of a BR, a total styrene amount (S) in 100% by mass of the rubber component is 24.0% by mass (= 25 $\times$ 30/100 + 27.5 $\times$ 60/100). Besides, a styrene amount of the styrene-containing rubber is calculated by $^1$H-NMR measurement.

The "thickness T of the surface rubber layer at the tire maximum width position" is a distance (mm) from a sidewall surface to a carcass cord surface, measured along a normal line L of the tire maximum width position PW of the sidewall. The "tire maximum width position PW" refers to the maximum width position within a cross section in a tire width direction measured in a standardized state. The "surface rubber layer" shall include a sidewall rubber.

The "tire weight" is expressed in G (kg). However, G is a weight of a single tire not including a weight of a rim. Moreover, when a noise suppressing material, a sealant, a sensor, etc. are attached to a tire lumen, G is a value including these weights.

The "maximum load capacity $(W_L)$ (kg)" is a value calculated by the following equation (1) and (2) when a tire cross-sectional width measured in a standardized state is defined as Wt (mm), a tire cross-sectional height is defined as Ht (mm), and a tire outer diameter is defined as Dt (mm). V is a virtual volume of space occupied by a tire. The tire cross-sectional width Wt is the maximum width between outer surfaces of sidewalls excluding, if any, patterns or characters on the side surface of the tire in the above-described state. The tire cross-sectional height Ht is a distance from a bottom surface of a bead part to the outermost surface of a tread, which is half a difference between the outer diameter of the tire and a nominal size of a rim.

$$V = \{(Dt/2)^2 - (Dt/2-Ht)^2\} \times \pi \times Wt \quad (1)$$

$$W_L = 0.000011 \times V + 100 \quad (2)$$

The "tire cross-sectional width Wt (mm)" is the maximum width between outer surfaces of sidewalls excluding, if any, patterns or characters on the side surface of the tire in the standardized state. The "tire outer diameter Dt (mm)" is a tire outer diameter measured in a standardized state.

An "oil content" also includes an amount of oil contained in the oil-extended rubber.

<Measuring method>

The "amount of the cis-1,4-bond butadiene unit in the total amount of the rubber component" is a total content (% by mass) of a cis-1,4-bond butadiene unit contained in 100% by mass of the rubber component, and is calculated by $\Sigma$ (amount of cis-1,4-bond butadiene unit (% by mass) of each butadiene unit-containing rubber $\times$ content (% by mass) in rubber component of each butadiene unit-containing rubber / 100). Here, since the butadiene rubber is composed only of a diene unit, the amount of the cis-1,4-bond butadiene unit is the same value as a cis content of the butadiene rubber. Moreover, since the styrene-butadiene rubber comprises a structural unit other than the diene unit, the amount of the cis-1,4-bond butadiene unit is calculated by the following equation.

(Total content of cis-1,4-bond butadiene unit) = (100-styrene content) $\times$ (cis content of SBR) / 100 For example, if the rubber component consists of 40% by mass of a butadiene rubber (cis content: 97% by mass), 10% by mass of a styrene-butadiene rubber (cis content: 80% by mass, styrene content: 30% by mass), and 50% by mass of an isoprene-based rubber, an amount of the cis-1,4-bond butadiene unit in a total amount of the rubber component is 44.4% by mass (= (97$\times$0.4) + {(100-30)$\times$80/100$\times$0.1} + 0).

The "crack growth rate when the rubber composition is fixed and a cut is made" is calculated by crack growth distance/crack observation time when a pure shear specimen with a vertical side of 22.4 mm, a horizontal side of 150.0 mm, and a thickness of 1.0 mm is pinched in parallel with arms at both horizontal sides thereof under an atmosphere at 25°C and subjected to a biaxial tensile test with both axes being parallel to a longitudinal direction using a biaxial tensile test system (e.g., Autograph AG-Xplus manufactured by Shimadzu Corporation), and then the test piece is fixed at the time when strain of the test piece becomes constant, and a 10.0 mm of cut is made parallel to a horizontal direction using scissors, starting from a middle point of a vertical side on one side of the specimen. Here, the time when strain of the test piece becomes constant refers to a state where a force is applied to fix the test piece so that a length of the specimen becomes constant, which is also referred to as a constant strain. Also, strain of the test piece indicates an amount of displacement with respect to a longitudinal length of a flat part of the specimen.

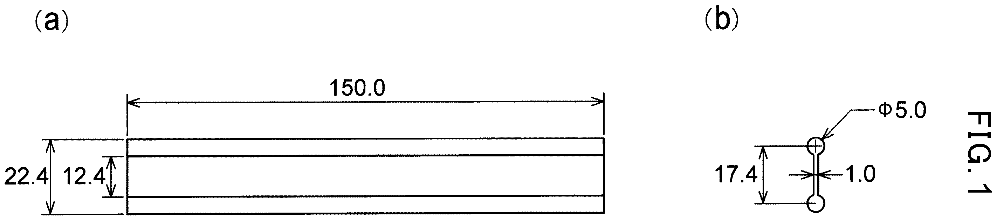

The "pure shear specimen" is a specimen of the shape shown in FIG. 1. FIG. 1(a) is a front view of a pure shear specimen. As shown in FIG. 1(a), the pure shear specimen is rectangular with the horizontal side being longer than the vertical side when viewed from the front. The vertical side is of 22.4 mm and the horizontal side is of 15.0 mm. FIG. 1(b) is a view of the pure shear specimen seen from the horizontal direction. A thickness of the pure shear specimen is 1.0 mm. As shown in FIG. 1(b), the pure shear specimen has cylindrical handle parts at both ends thereof, which serve as handles during the tensile test. As shown in FIG. 1(b), a circular diameter of the handle part is 5.0 mm, and a vertical length of the flat part is 12.4 mm. That is, the pure shear specimen consists of handle parts and a flat part. The handle part has two cylinders having parallel central axes and equal lengths, and both ends of the handle part are aligned. The longitudinal direction of the pure shear specimen is perpendicular to the surface of the handle cylinder, and the horizontal direction of the pure shear specimen is parallel to the central axis of the cylinder of the handle part. The flat part is a rectangular parallelepiped, and a vertical side and a thickness of the rectangular parallelepiped of the flat part are both 22.4 mm in vertical side and 1.0 mm in thickness, which are the same as the vertical side and the thickness of the pure shear specimen. A length of the rectangular parallelepiped of the flat part in the vertical direction is 12.4 mm, which is calculated by subtracting the diameter of 5.0 mm of the cylinder of the handle part at both ends from the vertical side of the pure shear specimen.

The "70°C tan $\delta$" is measured under a condition of a temperature at 70°C, an initial strain of 10%, a dynamic strain of ±1%, a frequency of 10 Hz, and an elongation mode, using EPLEXOR series manufactured by gabo Systemtechnik GmbH. When collecting a sample from a tire, a sample with 20 mm in length × 4 mm in width × 1 mm in thickness is collected from the sidewall of the tire, so that the tire circumferential direction becomes a long side and the tire radial direction becomes a thickness direction.

The "styrene content" is a value calculated by $^1$H-NMR measurement, and is applied to, for example, a rubber component having a repeating unit derived from styrene such as a SBR. A "vinyl content (1,2-bond butadiene unit amount)" is a value calculated by infrared absorption spectrometry according to JIS K 6239-2:2017, and is applied to, for example, a rubber component having a repeating unit derived from butadiene such as a SBR and a BR. A "cis content (cis-1,4-bond butadiene unit amount)" is a value calculated by infrared absorption spectrometry according to JIS K 6239-2: 2017, and is applied to, for example, a rubber component having a repeating unit derived from butadiene such as a BR.

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation). For example, it is applied for a SBR, a BR, a resin component, a liquid rubber, and the like.

An "average primary particle size" is a value calculated by an arithmetic mean of 400 particles which are photographed with a transmission or scanning electron microscope when, in a case that the particle is in a substantially spherical shape, the diameter of sphere is defined as a particle size, in a case that it is in a needle or rod shape, the minor axis is defined as a particle size, and in a case that it is in an indefinite shape, an average of the minor axis and the diameter is defined as a particle size. The definition is applied to silica, carbon black, etc.

A "$N_2SA$ of carbon black" is measured according to JIS K 6217-2:2017. A "$N_2SA$ of silica" is measured by the BET method according to ASTM D 3037-93.

A "softening point of a resin component" is a temperature at which a sphere drops when the softening point specified in JIS K 6220-1: 2001 is measured with a ring and ball softening point measuring device.

<Tire>

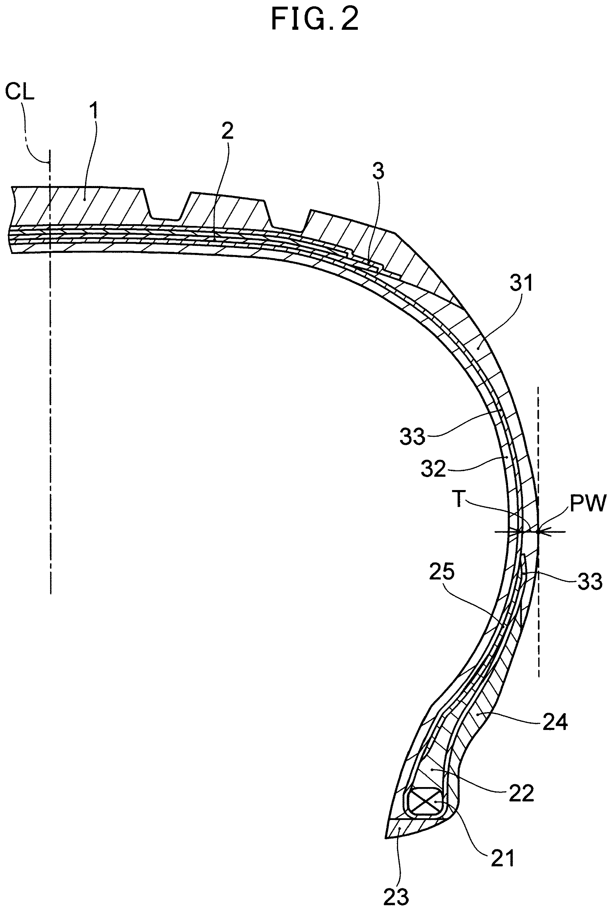

FIG. 2 illustrate the tire that is one embodiment of the present invention, but the present invention is not limited thereto. FIG. 2 shows a part of a cross section of the tire perpendicular to the circumferential direction. In FIG. 2, a vertical direction is a tire radial direction, a horizontal direction is a tire axial direction, and a direction perpendicular to a paper surface is a tire circumferential direction.

The tire of the present invention comprises a tread 1 extending in a circumferential direction to form an annular shape, a pair of sidewalls 31 arranged on both sides of the tread part, a pair of bead parts having a bead core 21, at least one carcass layer moored to the bead core 21, and at least one belt layer 2 arranged on the outer side of the carcass layer 33 in a tire radial direction.

The bead part of the tire according to the present invention is located inner side of the sidewall 31 in the tire axial direction. The bead part comprises a bead core 21 and a bead apex 22 that extends from the core to the outer side in the tire radial direction. The bead apex 22 is tapered outward in the tire radial direction.

In FIG. 2, the carcass 33 is folded around the bead core 21 from inside to outside in the tire axial direction. Due to this folding, a main part and a folded part are formed on the carcass 33. A strip apex 25 generally extends in the tire radial direction. The strip apex 25 is laminated with the bead apex 22 in the vicinity of the inner end in the tire radial direction. The strip apex 25 is sandwiched between the main part and the folded part of the carcass 33 in the vicinity of the inner end in the tire radial direction.

<<Crack growth rate>>

The crack growth rate of the rubber composition for sidewall of the present invention satisfies at least one of 0.20 m/s or less in the case of 250% strain and 0.30 m/s or less in the case of 300% strain.

<<Crack growth rate in the case of 250% strain>>

The crack growth rate of the rubber composition for sidewall of the present invention in the case of 250% strain is preferably 0.25 m/s or less, more preferably 0.20 m/s or less, further preferably 0.17 m/s or less, further preferably 0.15 m/s or less, further preferably 0.11 m/s or less, further preferably 0.10 m/s or less, particularly preferably 0.08 m/s or less. The crack growth rate in the case of 250% strain is a value calculated by the above-described method. When the crack growth rate in the case of 250% strain is within the above-described ranges, crack durability of the rubber composition for sidewall is improved, and crack growth resistance of the sidewall is improved, improving high-speed durability of the tire.

The crack growth rate in the case of 250% strain can be decreased by increasing viscoelasticity of the rubber, and can be decreased by increasing a molecular weight of a cross-linking point of the rubber.

<<Crack growth rate in the case of 300% strain>>

The crack growth rate of the rubber composition for sidewall of the present invention in the case of 300% strain is preferably 0.50 m/s or less, more preferably 0.40 m/s or less, further preferably 0.30 m/s or less, further preferably 0.25 m/s or less, further preferably 0.20 m/s or less, further preferably 0.15 m/s or less, further preferably 0.12 m/s or less, particularly preferably 0.10 m/s or less. The crack growth rate in the case of 300% strain is a value calculated by the above-described method. When the crack growth rate in the case of 300% strain is within the above-described ranges, crack durability of the rubber composition for sidewall is improved, and crack growth resistance of the sidewall is improved, improving high-speed durability of the tire.

The crack growth rate in the case of 300% strain can be decreased by increasing viscoelasticity of the rubber, and can be decreased by increasing the molecular weight of the cross-linking point of the rubber.

<<70°C tan $\delta$>>

The 70°C tan $\delta$ of the rubber composition for sidewall of the present invention is preferably 0.17 or less, more preferably 0.15 or less, further preferably 0.14 or less, particularly preferably 0.13 or less, from the viewpoint of effects of the present invention. On the other hand, a lower limit value of the 70°C tan $\delta$ is not particularly limited, but it can be, for example, 0.18 or more, 0.20 or more, or 0.25 or more. The 70°C tan $\delta$ can be adjusted depending on a compounding amount of a filler, etc.

<<Amount of cis-1,4-bond butadiene unit in total amount of rubber component>>

In the rubber composition for sidewall of the present invention, the amount of the cis-1,4-bond butadiene unit in the total amount of the rubber component is 80.0% by mass or less, preferably less than 75.0% by mass, more preferably less than 70.0% by mass, further preferably less than 68.0% by mass. When the amount of the cis-1,4-bond butadiene unit in the total amount of the rubber component is more than 80.0% by mass, the thermoplastic resin becomes difficult to disperse in the rubber phase. A lower limit value of the amount of the cis-1,4-bond butadiene unit in the total amount of the rubber component is, but not particularly limited to, preferably 5% by mass or more, more preferably 10% by mass or more, further preferably 20% by mass or more, particularly preferably more than 27% by mass, from the viewpoint of the effects of the present invention.

<<Total styrene amount>>

In the rubber composition for sidewall of the present invention, the total styrene amount (S) in the rubber component is preferably less than 20.0% by mass, more preferably less than 18.0% by mass, further preferably less than 15.0% by mass, particularly preferably less than 12.0% by mass. When the S is more than 20.0% by mass, aggregation with a styrene part in a rubber matrix (sulfur-crosslinked rubber component) cannot be suppressed, making it difficult for the thermoplastic resin to disperse in the styrene part. A lower limit value of the S is, but not particularly limited to, preferably 3.0% by mass or more, more preferably 3.5% by mass or more, further preferably 4.0% by mass or more, particularly preferably more than 4.0% by mass, from the viewpoint of the effects of the present invention.

In the tire according to the present invention, the ratio ($G/W_L$) of the tire weight G (kg) to the maximum load capacity $W_L$ (kg) is preferably 0.0210 or less, more preferably 0.0205 or less, further preferably 0.0200 or less, particularly preferably 0.0195 or less, from the viewpoint of the effects of the present invention. On the other hand, a lower limit value of the $G/W_L$ is not particularly limited, but it can be, for example, 0.0090 or more, 0.0100 or more, 0.0110 or more, or 0.0120 or more. Besides, the tire weight G can be changed by a conventional method, that is, it can be increased by increasing a specific gravity of the tire or by increasing a thickness of each member of the tire, and it can be decreased by decreasing the specific gravity of the tire or by decreasing the thickness of each member of the tire.

The maximum load capacity $W_L$ (kg) is preferably 300 or more, more preferably 400 or more, further preferably 450 or more, particularly preferably 500 or more, from the viewpoint of better exhibiting the effects of the present invention. Moreover, the maximum load capacity $W_L$ (kg) can be, for example, 1300 or less, 1200 or less, 1100 or less, 1000 or less, 900 or less, 800 or less, 700 or less, or 650 or less, from the viewpoint of better exhibiting the effects of the present invention. Besides, the maximum load capacity $W_L$ can be increased by increasing the virtual volume V of the space occupied by the tire, and it can be decreased by decreasing the virtual volume V of the space occupied by the tire.

The thickness T (mm) of the surface rubber layer at the tire maximum width position is preferably 1.0 mm or more, more preferably 1.3 mm or more, further preferably 1.5 mm or more, particularly preferably 1.7 mm or more, from the viewpoint of the effects of the present invention. Moreover, the T (mm) is preferably 12.0 mm or less, more preferably 11.0 mm or less, further preferably 10.0 mm or less, particularly preferably 8.0 mm or less, from the viewpoint of the effects of the present invention.

The ratio (S/T) of the total styrene amount S (% by mass) in the rubber component to the thickness T (mm) of the surface rubber layer at the tire maximum width position is preferably 0.5 or more, more preferably 0.8 or more, further preferably 1.0 or more, further preferably 1.5 or more, further preferably 2.0 or more, particularly preferably 2.5 or more. Moreover, the S/T is preferably 6.0 or less, more preferably 5.5 or less, further preferably 5.0 or less, particularly preferably 4.5 or less. When the S/T is within the above-described ranges, a stress tends to be easily relaxed in a styrene domain part even when rigidity depending on the thickness of the bead part 4 is high.

The ratio ($R_1$/T) of the total content $R_1$ (% by mass) of the thermoplastic resin described below to the thickness T (mm) of the surface rubber layer at the tire maximum width position is preferably 1.0 or more, more preferably 2.0 or more, further preferably 3.0 or more, further preferably 4.0 or more, further preferably 5.0 or more, further preferably 6.0 or more, particularly preferably 7.0 or more. Moreover, the $R_1$/T is preferably 10.0 or less, more preferably 9.0 or less, further preferably 8.5 or less. When the $R_1$/T is within the above-described ranges, dispersibility of the thermoplastic resin tends to be easily improved even when rigidity depending on the thickness of the bead part 4 is high.

[Rubber composition]

In the tire of the present invention, the rubber composition for sidewall comprises a rubber component comprising a styrene-butadiene rubber and/or a butadiene rubber and a thermoplastic resin, and it has been found that the rubber composition for sidewall in which a crack growth rate when measured with a cut being made under a predetermined test condition is at a certain level or lower can be improved in high-speed durability.

<Rubber component>

The rubber composition constituting the sidewall of the present invention (hereinafter referred to as the rubber composition of the present invention, unless otherwise specified) comprises a styrene-butadiene rubber (SBR) and/or a butadiene rubber (BR) as a rubber component. It preferably comprises a SBR and a BR, and more preferably comprises a SBR, a BR, and an isoprene-based rubber.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable from the viewpoint that they can well improve fuel efficiency and abrasion resistance. These SBRs may be used alone, or two or more thereof may be used in combination.

As the SBR, an oil-extended SBR can be used, or a non-oil-extended SBR can be used. An extending oil amount of the SBR, i.e., a content of an extending oil contained in the SBR when used is preferably 5 parts by mass or more, more preferably 8 parts by mass or more, further preferably 10 parts by mass or more, based on 100 parts by mass of a rubber solid content of the SBR. Moreover, the content of the extending oil contained in the SBR is preferably 60 parts by mass or less, preferably 50 parts by mass or less, more preferably 45 parts by mass or less, based on 100 parts by mass of the rubber solid content of the SBR.

A styrene content of the SBR can be adjusted as appropriate to satisfy a preferred range of the total styrene amount S mentioned above, but it is preferably 10.0% by mass or more, more preferably 15.0% by mass or more, further preferably 20.0% by mass or more, particularly preferably 25.0% by mass or more. Moreover, the styrene content of the SBR is preferably 50.0% by mass or less, more preferably 45.0% by mass or less, further preferably 40.0% by mass or less. Besides, the styrene content of the SBR is measured by the above-described measuring method.

A vinyl content of the SBR is preferably 10 mol% or more, more preferably 15 mol% or more, further preferably 20 mol% or more, from the viewpoints of ensuring reactivity with the thermoplastic resin and rubber strength. Moreover, the vinyl content of the SBR is preferably 70 mol% or less, more preferably 65 mol% or less, further preferably 60 mol% or less, from the viewpoints of prevention of increase in temperature dependence, elongation at break, and abrasion resistance. Besides, the vinyl content of the SBR is measured by the above-described measuring method.

A weight-average molecular weight (Mw) of the SBR is preferably 200,000 or more, more preferably 250,000 or more, further preferably 300,000 or more, from the viewpoint of the effects of the present invention. Moreover, it is preferably 2,000,000 or less, more preferably 1,800,000 or less, further preferably 1,500,000 or less, from the viewpoint of cross-linking uniformity. Besides, the Mw of the SBR is measured by the above-described measuring method.

A content of the SBR in the rubber component can be appropriately selected so that the total styrene amount S in the rubber component satisfies the above-described ranges, and it can be, for example, 5% by mass or more, 10% by mass or more, or 15% by mass or more. On the other hand, the content of the SBR in the rubber component is preferably 70% by mass or less, more preferably 60% by mass or less, further preferably 50% by mass or less, particularly preferably 40% by mass or less, from the viewpoint of the effects of the present invention.

(BR)

The BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR), and it is preferable to comprise a modified BR. These BRs may be used alone, or two or more thereof may be used in combination.

As the high cis BR, for example, those commercially available from Zeon Corporation, Ube Industries, Ltd., JSR Corporation, etc. can be used. When the high cis BR is compounded, low temperature characteristics and abrasion resistance can be improved. The cis content is preferably 95 mol% or more, more preferably 96 mol% or more, further preferably 97 mol% or more, particularly preferably 98 mol% or more. Besides, the cis content is measured by the above-described measuring method.

Examples of the modified BRs include those obtained by adding a tin compound after polymerizing 1,3-butadiene by a lithium initiator, and further those in which the terminal of the modified BR molecule has tin-carbon bond (a tin-modified BR), a butadiene rubber (a modified BR for silica) having a condensed alkoxysilane compound at its active terminal, and the like, and it is preferable to comprise a tin-modified BR.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoints of cross-linking uniformity, etc. Besides, the Mw of the BR is measured by the above-described measuring method.

A content of the BR in the rubber component is preferably 5% by mass or more, more preferably 10% by mass or more, further preferably 15% by mass or more, further preferably 20% by mass or more, particularly preferably 25% by mass or more, from the viewpoint of ensuring ozone resistance. On the other hand, the content of the BR in the rubber component is preferably 70% by mass or less, more preferably 65% by mass or less, further preferably 60% by mass or less, particularly preferably 55% by mass or less, from the viewpoint of high-speed durability.

(Isoprene-based rubber)

Examples of the isoprene-based rubber include a natural rubber (NR), an isoprene rubber (IR), a purified NR, a modified NR, a modified IR, and the like. As the NR, those common in the tire industry such as, for example, SIR20, RSS#3, and TSR20 can be used. Examples of the purified NR include, for example, a deproteinized natural rubber (DPNR), an ultra pure natural rubber, and the like. Examples of the modified NR include, for example, an epoxidized natural rubber (ENR), a hydrogenated natural rubber (HNR), a grafted natural rubber, and the like. Examples of the modified IR include, for example, an epoxidized isoprene rubber, a hydrogenated isoprene rubber, a grafted isoprene rubber, and the like. These isoprene-based rubbers may be used alone, or two or more thereof may be used in combination.

A content of the isoprene-based rubber in the rubber component is preferably 10% by mass or more, more preferably 15% by mass or more, further preferably 20% by mass or more, further preferably 25% by mass or more, particularly preferably 30% by mass or more. On the other hand, the content of the isoprene-based rubber in the rubber component is preferably 80% by mass or less, more preferably 75% by mass or less, further preferably 70% by mass or less, further preferably 65% by mass or less, further preferably 60% by mass or less, further preferably 55% by mass or less, particularly preferably 50% by mass or less. When the content of the isoprene-based rubber is within the above-described ranges, flexibility of the sidewall rubber is improved in a wide temperature range, and it is considered that high-speed durability can be improved.

(Other rubber components)

The rubber component can also comprise rubber components other than the above-described components as long as the effects of the present invention are not impaired, examples of which include, for example, non-diene-based rubbers such as a hydrogenated nitrile rubber (HNBR), a butyl rubber (IIR), a halogenated butyl rubber, an ethylene propylene rubber, a polynorbornene rubber, a silicone rubber, a chlorinated polyethylene rubber, a fluororubber (FKM), an acrylic rubber (ACM), and a hydrin rubber.

<<Thermoplastic Resin>>

The rubber composition of the present invention comprises a thermoplastic resin. Here, the thermoplastic resin refers to a resin that can be softened and molded when heated, particularly a hydrocarbon resin having carbon and hydrogen as basic skeletons, which is used as a plasticizing agent or tackifying resin in a polymer matrix.

Examples of the thermoplastic resin include a cyclopentadiene resin, a coumarone resin, a petroleum resin (aliphatic petroleum resin, aromatic petroleum resin, alicyclic petroleum resins, etc.), a rosin derivative, and the like, and it is preferable to comprise at least one of a terpene resin and a petroleum resin. The thermoplastic resin may be used alone, or two or more thereof may be used in combination.

<<Petroleum resin>>

The petroleum resin is not particularly limited, examples of which include an aliphatic petroleum resin, an aromatic petroleum resin, and an aliphatic/aromatic copolymerization-based petroleum resin, and they may be used alone, or two or more thereof may be used in combination. As the aliphatic petroleum resin, a resin obtained by cationically polymerizing an unsaturated monomer such as isoprene or cyclopentadiene which is an petroleum fraction (C5 fraction) equivalent to 4 to 5 carbon atoms (also referred to as a C5-based petroleum resin) can be used. As the aromatic petroleum resin, a resin obtained by cationically polymerizing a monomer such as vinyltoluene, alkylstyrene, or indene which is a petroleum fraction (C9 fraction) equivalent to 8 to 10 carbon atoms (also referred to as a C9-based petroleum resin) can be used. As the aliphatic/aromatic copolymerization-based petroleum resin, a resin obtained by copolymerizing the above-described C5 fraction and C9 fraction (also referred to as a C5-C9-based petroleum resin) is used. Moreover, a resin, in which the above-described petroleum resin is hydrogenated, may be used. Among them, an aromatic petroleum resin is appropriately used. Examples of the aromatic petroleum resin include, for example, an $\alpha$-methylstyrene resin. Examples of an $\alpha$-methylstyrene-based resin include a homopolymer of $\alpha$-methylstyrene (poly-$\alpha$-methylstyrene) and a copolymer of $\alpha$-methylstyrene and another compound including an aromatic compound or a phenol-based compound. Examples of another compound that may constitute this copolymer include styrene, methylstyrene, methoxystyrene, divinylbenzene, and the like. As the $\alpha$-methylstyrene-based resin, one manufactured by Kraton Corporation, and the like are appropriately used.

<<Terpene-based resin>>

Examples of the terpene-based resin include a polyterpene resin, a terpene phenol resin, a terpene styrene resin, and the like, and they may be used alone, or two or more thereof may be used in combination. Among them, a terpene styrene resin is appropriately used because it is particularly compatible with both a SBR and a BR and sulfur becomes easily dispersed in the rubber component.

The polyterpene resin is a resin made from at least one selected from terpene compounds such as $\alpha$-pinene, $\beta$-pinene, limonene, and dipentene. The terpene-based resin may be used alone, or two or more thereof may be used in combination.

The terpene phenol resin is a resin made from the terpene compound and the phenol-based compound. The terpene styrene resin is a resin made from the terpene compound and styrene. The polyterpene resin and the terpene styrene resin may be hydrogenated (a hydrogenated polyterpene resin, a hydrogenated terpene styrene resin). The hydrogenation treatment to the terpene-based resin can be performed by a known method, and a commercially available hydrogenated resin can also be used.

In the present invention, a commercial product may be used as the terpene-based resin. Examples of such commercial product include those manufactured and sold by Yasuhara Chemical Co., Ltd., etc.

<<Rosin-based resin>>

The rosin-based resin is not particularly limited, examples of which include, for example, a natural resin rosin, a rosin-modified resin obtained by modifying the natural resin rosin with hydrogenation, disproportionation, dimerization, esterification, etc., and the like, and they may be used alone, or two or more thereof may be used in combination.

<<Coumarone-based resin>>

The coumarone-based resin is a resin comprising coumarone as a main component, examples of which include, for example, a coumarone resin, a coumarone indene resin, a copolymer resin comprising coumarone, indene, and styrene as main components, and the like. They may be used alone, or two or more thereof may be used in combination.

A softening point of the thermoplastic resin is preferably 80°C or higher, more preferably 90°C or higher, further preferably 95°C or higher, from the viewpoint of dispersibility to a styrene domain. Moreover, an upper limit value of the softening point of the thermoplastic resin is, but not particularly limited to, usually 200°C or lower.

A total content $R_1$ of the thermoplastic resin based on 100 parts by mass of the rubber component is preferably more than 5 parts by mass, more preferably more than 7 parts by mass, further preferably more than 8 parts by mass, further preferably more than 10 parts by mass. further preferably more than 12 parts by mass, from the viewpoint of the effects of the present invention. Moreover, the total content $R_1$ of the thermoplastic resin based on 100 parts by mass of the rubber component is preferably less than 40 parts by mass, more preferably less than 30 parts by mass, further preferably less than 20 parts by mass, from the viewpoint of molding processability of the tire.

<<Thermosetting resin>>

It is preferable that the rubber composition of the present invention further comprises a thermosetting resin. Here, the term "thermosetting resin" refers to a resin which is polymerized by heating so that a polymer forms a network structure and which is hardened to be irreversible.

Examples of the thermosetting resin include, for example, a cashew oil-modified phenol resin, a resorcinol resin, a modified resorcinol resin, a cresol resin, a modified cresol resin, and the like. Among them, a cashew oil-modified phenol resin is preferable. These thermosetting resins may be used alone, or two or more thereof may be used in combination. By compounding the thermosetting resin, crack growth resistance can be improved while suppressing an increase in tan δ of the rubber.

The cashew oil-modified phenol resin is resin obtained by modifying a phenol resin which is obtained by reacting phenol with aldehydes such as, for example, formaldehyde, acetaldehyde, and furfural with an acid or alkali catalyst using a cashew oil.

Examples of the resorcinol resin include, for example, a resorcinol-formaldehyde condensate. Examples of the modified resorcinol resin include, for example, those in which a part of a repeating unit of the resorcinol resin is alkylated.

Examples of the cresol resin include, for example, a cresolformaldehyde condensate. Examples of the modified cresol resin include, for example, those in which a methyl group at the terminal of the cresol resin is modified to a hydroxyl group and those in which a part of a repeating unit of the cresol resin is alkylated.

A softening point of the thermosetting resin is preferably 80°C or higher, more preferably 90°C or higher, further preferably 95°C or higher, from the viewpoint of the effects of the present invention. Moreover, an upper limit value of the softening point of the thermoplastic resin is, but not particularly limited to, usually 200°C or lower.

A content $R_2$ of the thermosetting resin when compounded based on 100 parts by mass of the rubber component is preferably more than 1 part by mass, more preferably more than 3 parts by mass, further preferably more than 4 parts by mass, from the viewpoint of the effects of the present invention. Moreover, the content of the thermosetting resin is preferably less than 20 parts by mass, more preferably less than 15 parts by mass, further preferably less than 10 parts by mass, from the viewpoint of processability (sheet rollability).

A ratio $R_2/R_1$ of a total content $R_2$ to a total content $R_1$ of the thermosetting resin based on 100 parts by mass of the rubber component is preferably 0.10 or more, preferably 0.20 or more, further preferably 0.25 or more. Moreover, $R_2/R_1$ is preferably 0.80 or less, more preferably 0.70 or less, further preferably 0.60 or less, further preferably 0.50 or less.

<<Filler>>

The rubber composition according to the present invention preferably comprises a filler, preferably comprises silica as a filler, and more preferably comprises carbon black and silica. Moreover, it may comprise a filler consisting of carbon black and silica.

(Silica)

Silica is not particularly limited, and those common in the tire industry can be used, such as, for example, silica prepared by a dry process (anhydrous silica) and silica prepared by a wet process (hydrous silica). Moreover, if necessary, silica made from a biomass material such as rice husk may be used. Among them, hydrous silica prepared by a wet process is preferable from the reason that it has many silanol groups. These silica may be used alone, or two or more thereof may be used in combination.

An average primary particle size of silica is preferably 10 nm or more, more preferably 12 nm or more, further preferably 14 nm or more. When the average primary particle size of silica is within the above-described ranges, rubber molecules bound by silica are minimized and become easy to flexibly move, so that dispersibility of silica is improved and durability of the rubber composition is improved. On the other hand, the average primary particle size is preferably 22 nm or less, more preferably 20 nm or less, further preferably 18 nm or less, from the viewpoint of the effects of the present invention. Besides, the average primary particle size of silica is measured by the above-described measuring method.

A nitrogen adsorption specific surface area ($N_2SA$) of silica is preferably 110 m²/g or more, more preferably 140 m²/g or more, further preferably 170 m²/g or more, particularly preferably 180 m²/g or more, from the viewpoint of the effects of the present invention. Moreover, the $N_2SA$ is preferably 350 m²/g or less, more preferably 300 m²/g or less, further preferably 250 m²/g or less. Besides, the $N_2SA$ of silica is measured by the above-described measuring method.

A content of silica based on 100 parts by mass of the rubber component is preferably 1 part by mass or more, more preferably 3 parts by mass or more, further preferably 5 parts by mass or more, further preferably 10 parts by mass or more, further preferably 12 parts by mass or more, from the viewpoint of obtaining reinforcing property. Moreover, it is preferably less than 55 parts by mass, more preferably less than 50 parts by mass, more preferably less than 45 parts by mass, more preferably less than 40 parts by mass, further preferably less than 31 parts by mass, particularly preferably less than 30 parts by mass, from the viewpoint of fuel efficiency.

(Carbon black)

Carbon black is not particularly limited, and, for example, those commonly used in the tire industry such as GPF, FEF, HAF, ISAF, and SAF can be used. These carbon black may be used alone, or two or more thereof may be used in combination.

An average primary particle size of carbon black is preferably 40 nm or more, more preferably 45 nm or more, further preferably 50 nm or more, particularly preferably 55 nm or more. When the average primary particle size of carbon black is within the above-described ranges, rubber molecules bound by carbon black are minimized, and it is considered that dispersibility of carbon black is improved. On the other hand, the average primary particle size is preferably 120 nm or less, more preferably 110 nm or less, further preferably 100 nm or less, particularly preferably 90 nm or less, from the viewpoint of the effects of the present invention. Besides, the average primary particle size of carbon black is measured by the above-described measuring method.

A nitrogen adsorption specific surface area ($N_2SA$) of carbon black is preferably 55 m²/g or less, more preferably 50 m²/g or less, further preferably 45 m²/g or less, from the viewpoint of the effects of the present invention. Moreover, the $N_2SA$ is preferably 20 m²/g or more, more preferably 25 m²/g or more, further preferably 30 m²/g or more. Besides, the $N_2SA$ of carbon black is measured by the above-described measuring method.

A content of carbon black when compounded based on 100 parts by mass of the rubber component is preferably 10 parts by mass or more, more preferably 12 parts by mass or more, further preferably 15 parts by mass or more, further preferably 20 parts by mass or more, from the viewpoints of obtaining reinforcing property and preventing deterioration. Moreover, it is preferably 55 parts by mass or less, more preferably 50 parts by mass or less, further preferably 45 parts by mass or less, from the viewpoint of fuel efficiency.

A ratio of the content of silica to the content of carbon black when compounded as fillers is not particularly limited, and a ratio of the content of silica to a total content of silica and carbon black can be, for example, 20% by mass or more, 30% by mass or more, 40% by mass or more, 50% by mass or more, 60% by mass or more, or 70% by mass.

(Other fillers)

As fillers other than silica and carbon black, those commonly used in the tire industry can be compounded, such as aluminum hydroxide, calcium carbonate, alumina, clay, and talc.

A total content of fillers based on 100 parts by mass of the rubber component is preferably more than 30 parts by mass, more preferably more than 35 parts by mass, further preferably more than 40 parts by mass, further preferably more than 42 parts by mass, from the viewpoint of the effects of the present invention. Moreover, the total content of fillers based on 100 parts by mass of the rubber component is preferably less than 80 parts by mass, more preferably less than 70 parts by mass, further preferably less than 60 parts by mass, particularly preferably less than 51 parts by mass, from the viewpoint of the effects of the present invention.

Besides, in a case where the filler consists of silica and carbon black, if the total content of fillers and the content of one of silica and carbon black are determined as described above, the remaining content of the other is accordingly determined.

(Silane coupling agent)

Silica may be used in combination with a silane coupling agent. The silane coupling agent is not particularly limited, and silane coupling agents conventionally used in combination with silica in the tire industry can be used, examples of which include, for example, mercapto-based silane coupling agents such as 3-mercaptopropyltrimethoxysilane, NXT-Z100, NXT-Z45, and NXT manufactured by Momentive Performance Materials; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl) aminopropyltriethoxysilane; glycydoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among them, sulfide-based silane coupling agents and/or mercapto-based silane coupling agents are preferable, and sulfide-based silane coupling agents are more preferable. These silane coupling agents may be used alone, or two or more thereof may be used in combination.

A content of the silane coupling agent when compounded based on 100 parts by mass of the rubber component is preferably 0.5 parts by mass or more, more preferably 1.0 part by mass or more, further preferably 1.5 parts by mass or more, from the viewpoint of enhancing dispersibility of silica. Moreover, it is preferably 20 parts by mass or less, more preferably 15 parts by mass or less, further preferably 10 parts by mass or less, from the viewpoint of preventing deterioration of abrasion resistance.

A content of the silane coupling agent when compounded based on 100 parts by mass of silica is preferably 1 part by mass or more, more preferably 3 parts by mass or more, further preferably 5 parts by mass or more, particularly preferably 8 parts by mass or more, from the viewpoint of enhancing dispersibility of silica. Moreover, it is preferably 20 parts by mass or less, more preferably 18 parts by mass or less, further preferably 16 parts by mass or less, from the viewpoints of cost and processability.

(Other compounding agents)

The rubber composition according to the present invention can appropriately comprise compounding agents conventionally and generally used in the tire industry, for example, a softening agent other than resin, wax, processing aid, stearic acid, zinc oxide, an antioxidant, a vulcanizing agent, a vulcanization accelerator, and the like, in addition to the above-described components.

Examples of the softening agent other than resin include, for example, oil, a liquid rubber, and the like.

Examples of oil include, for example, a process oil, vegetable fats and oils, animal fats and oils, and the like. Examples of the process oil include a paraffin-based process oil, a naphthene-based process oil, an aroma-based process oil, and the like. In addition, as an environmental measure, process oil having a low content of a polycyclic aromatic compound (PCA) can also be used. Examples of the process oil having a low content of a PCA include a mild extraction solution (MES), a treated distillate aromatic extract (TDAE), a heavy naphthenic oil, and the like.

A content of oil when compounded based on 100 parts by mass of the rubber component is preferably 1 part by mass or more, more preferably 2 parts by mass or more, further preferably 3 parts by mass or more, particularly preferably 5 parts by mass or more, from the viewpoint of processability. Moreover, it is preferably 100 parts by mass or less, more preferably 80 parts by mass or less, further preferably 60 parts by mass or less, from the viewpoint of abrasion resistance.

The liquid rubber is not particularly limited as long as it is a polymer in a liquid state at a normal temperature (25°C), examples of which include, for example, a liquid butadiene rubber (a liquid BR), a liquid styrene-butadiene rubber (a liquid SBR), a liquid isoprene rubber (a liquid IR), a liquid styreneisoprene rubber (a liquid SIR), a liquid farnesene rubber, and the like. These liquid rubbers may be used alone, or two or more thereof may be used in combination.

A content of the liquid rubber when compounded based on 100 parts by mass of the rubber component is preferably 1 part by mass or more, more preferably 2 parts by mass or more, further preferably 3 parts by mass or more, particularly preferably 5 parts by mass or more. Moreover, the content of the liquid rubber is preferably 50 parts by mass or less, more preferably 40 parts by mass or less, further preferably 30 parts by mass or less.

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of preventing whitening of a tire due to bloom.

Examples of the antioxidant include, but not particularly limited to, for example, amine-based, quinoline-based, quinone-based, phenol-based and imidazole-based compounds, and a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

A content of the antioxidant when compounded based on 100 parts by mass of the rubber component is preferably 0.5 parts by mass or more, more preferably 1.0 part by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of preventing deterioration. Besides, a content of the vulcanizing agent when an oil-containing sulfur is used as the vulcanizing agent shall be a total content of pure sulfur comprised in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone, or two or more thereof may be used in combination. Among them, one or more vulcanization accelerators selected from a group consisting of sulfenamide-based, guanidine-based, and thiazole-based vulcanization accelerators are preferable, from the viewpoint of desired effects can be obtained more appropriately.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-tert-butyl-2-benzothiazolylsulfenamide (TBBS) and N-cyclohexyl-2-benzothiazolylsulfenamide (CBS) are preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

Moreover, in a case where a thermoplastic resin is compounded, in order to cure the thermoplastic resin, it is preferable to use partial condensates of hexamethylenetetramine (HMT), hexamethoxymethylmelamine, hexamethoxymethylol melamine, and hexamethylol melamine pentamethyl ether (HMMPME), and the like, in combination. By using them in combination, hardness of the thermosetting resin can be further increased, and durability can be improved. They may be used alone, or two or more thereof may be used in combination.

A total content of the vulcanization accelerator when compounded based on 100 parts by mass of the rubber component is preferably 1.0 part by mass or more, more preferably 1.5 parts by mass or more, further preferably 2.0 parts by mass or more. Moreover, the content of the vulcanization accelerator based on 100 parts by mass of the rubber component is preferably 8.0 parts by mass or less, more preferably 7.0 parts by mass or less, further preferably 6.0 parts by mass or less, particularly preferably 5.0 parts by mass or less. When the content of the vulcanization accelerator is within the above-described ranges, breaking strength and elongation tend to be secured.

The rubber composition according to the present invention can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them.

Furthermore, the base kneading step can be divided into a plurality of steps, if desired.

A kneading condition is not particularly limited. Examples of kneading include, for example, in the base kneading step, a method of kneading at a discharge temperature at 150 to 170°C for 3 to 10 minutes, and in the final kneading step, a method of kneading at 70 to 110°C for 1 to 5 minutes. A vulcanization condition is not particularly limited. Examples of vulcanization include, for example, a method of vulcanizing at 150 to 200°C for 10 to 30 minutes.

The tire of the present invention comprising the sidewall composed of the rubber composition can be produced by a usual method. That is, the tire can be produced by extruding an unvulcanized rubber composition compounded from the rubber component and other components as necessary into a shape of a sidewall, attaching it together with other tire members on a tire forming machine, and molding them by a usual method to form an unvulcanized tire, followed by heating and pressurizing this unvulcanized tire in a vulcanizing machine. A vulcanization condition is not particularly limited. Examples of vulcanization include, for example, a method of vulcanizing at 150 to 200°C for 10 to 30 minutes.

<Application>

The tire of the present invention can be appropriately used as a tire for a passenger car, a tire for a truck/bus, a tire for a two-wheeled vehicle, or a racing tire. Among them, it is preferably used as a tire for a passenger car. Besides, the tire for a passenger car is a tire on the premise that it is mounted on a car running on four wheels and refers to one having a maximum load capacity of 1000 kg or less. Moreover, the tire of the present invention can be used as an all-season tire, a summer tire, or a winter tire such as a studless tire.

EXAMPLE

Examples that are considered to be preferable in implementation (Examples) are shown below, but the scope of the present invention is not limited to Examples.

The results are shown in the lower part of Table 1, which are calculated based on evaluation methods described below reviewing a tire comprising a sidewall produced using a rubber composition obtained by changing compoundings in accordance with the upper part of Table 1 using various chemicals shown below.

NR: TSR20

SBR 1: HPR850 manufactured by JSR Corporation (S-SBR, styrene content: 27.5% by mass, vinyl content: 59.0 mol%, non-oil-extended product)

SBR 2: HPR830E manufactured by JSR Corporation (S-SBR, styrene content: 39.5% by mass, vinyl content: 38.5 mol%, oil-extended product comprising 10.0 parts by mass of oil content based on 100 parts by mass of rubber component)

BR: BR1250H manufactured by Zeon Corporation (tin-modified BR, polymerized using lithium as an initiator, vinyl bond amount: 10 to 13%, cis content: 39.7%)

Carbon black: DIABLACK (Registered Trademark) E manufactured by Mitsubishi Chemical Corporation (FEF, N550, $N_2SA$: 41 $m^2$/g, average primary particle size: 81 nm)

Silica: Ultrasil 9100GR manufactured by Evonik Degussa GmbH ($N_2SA$: 230 $m^2$/g, average primary particle size: 15 nm)

Coupling agent (Silane coupling agent): Si266 manufactured by Evonik Degussa GmbH (bis(3-triethoxysilylpropyl) disulfide)

Thermoplastic resin 1: YS resin PX1150N manufactured by Yasuhara Chemical Co., Ltd. (terpene resin, softening point: 115±5°C)

Thermoplastic resin 2: SYLVATRAXX4401 manufactured by Kraton Corporation (α-methylstyrene resin, Mw: 700, softening point: 85°C)

Thermosetting resin: SUMILITERESIN PR-12686E manufactured by Sumitomo Bakelite Co., Ltd. (cashew oil-modified phenol resin, softening point: 100°C)

Wax: OZOACE 0355 manufactured by Nippon Seiro Co., Ltd.

Antioxidant 1: Nocrac 6C manufactured by Ouchi Shinko Chemical Industry Co., Ltd. (N-(1,3-dimethylbutyl)-N'-phenyl-p-phenylenediamine)

Antioxidant 2: Nocrac RD manufactured by Ouchi Shinko Chemical Industry Co., Ltd. (poly(2,2,4-trimethyl-1,2-dihydroquinoline))

Zinc oxide: Zinc oxide No. 1 manufactured by Mitsui Mining & Smelting Co., Ltd.

Stearic acid: Bead stearic acid "CAMELLIA" manufactured by NOF CORPORATION

Oil: Diana Process NH-70S (aromatic process oil manufactured by Idemitsu Kosan Co., Ltd.)
Sulfur: HK-200-5 manufactured by Hosoi Chemical Industry Co., Ltd. (5% oil-containing powdered sulfur)
Vulcanization accelerator 1: Nocceler CZ manufactured by Ouchi Shinko Chemical Industry Co., Ltd. (N-cyclohexyl-2-benzothiazolylsulfenamide (CBS))
Vulcanization accelerator 2: Nocceler D manufactured by Ouchi Shinko Chemical Industry Co., Ltd. (1,3-diphenylguanidine (DPG))
Vulcanization accelerator 3: Nocceler H manufactured by Ouchi Shinko Chemical Industry Co., Ltd. (hexamethylenetetramine (HMT))

(Examples and Comparative examples)

According to the compounding formulations shown in Table 1, using a 1.7 L closed Banbury mixer, all chemicals other than sulfur and vulcanization accelerators are kneaded for 5 minutes until a temperature reaches a discharge temperature at 170°C to obtain a kneaded product. Next, using a twin-screw open roll, sulfur and vulcanization accelerators are added to the obtained kneaded product, and the mixture is kneaded for 4 minutes until the temperature reaches 105°C to obtain an unvulcanized rubber composition. The obtained unvulcanized rubber composition is extruded into a shape of a sidewall with an extruder equipped with a mouthpiece having a predetermined shape and attached together with other tire members, forming an unvulcanized tire, and the unvulcanized tire is press-vulcanized under a condition of 170°C for 12 minutes to produce each test tire.

<Crack growth rate>

A pure shear specimen with a vertical side of 22.4 mm, a horizontal side of 150.0 mm, and a thickness of 1.0 mm is cut out from a sidewall of each test tire, a biaxial tensile test is performed parallel to a longitudinal direction with both horizontal sides being pinched by arms under an atmosphere of 25°C using Autograph AG-Xplus manufactured by Shimadzu Corporation, the specimen is fixed when strain reaches 250% and 300%, and then a 10.0 mm of cut is made starting from the middle point of the vertical side on one side of the specimen using scissors, and a video was taken of growth of a crack tip with a high-speed camera manufactured by nac Image Technology Inc. (MEMRECAM ACS-1 M60 128G monochrome model) to measure velocity of the crack tip that grows through 100.0 mm of a central part of the specimen from the taken movie data.

<70°C tan $\delta$>

A specimen is cut out from a sidewall of each test tire, and using a viscoelastic spectrometer RSA-G2 manufactured by TA Instruments, in accordance with JIS K 6394: 2007, a loss tangent (tan $\delta$) is measured at a temperature of 70°C, with an initial strain of 5%, a dynamic strain of $\pm$ 1%, and a frequency of 10 Hz.

<High-speed durability index>

For each test tire, a high-speed durability test is performed by a step speed method, using a drum tester, under a condition of a rim of 245/35ZR20 × 8.5J, an internal pressure of 360 kPa, a load of 4.61 kN, a room temperature at 41°C, and a camber angle of 0°. In the test, high-speed durability is evaluated by an index with the reference Comparative example (Comparative example 1) being as 100, based on a running time starting from a speed of 260 km/h with an increase by 10 km/h every 10 minutes until the tire is broken. The results show that the larger the index value is, the better the effect is.

Table 1

| | Example | | | | | | | | | |
|---|---|---|---|---|---|---|---|---|---|---|
| | 1 | 2 | 3 | 4 | 5 | 6 | 7* | 8 | 9 | 10 |
| Compounding amount (part by mass) | | | | | | | | | | |
| NR | 45 | 45 | 40 | 30 | 30 | 45 | 45 | 60 | 60 | 60 |
| SBR1 | 15 | - | 30 | - | - | - | - | 20 | - | - |
| SBR2 | - | 16.5 | - | 44 | 44 | 16.5 | 16.5 | - | - | 44 |
| (Solid rubber content) | - | (15) | - | (40) | (40) | (15) | (15) | - | - | (40) |
| BR | 40 | 40 | 30 | 30 | 30 | 40 | 40 | 20 | 40 | |

(continued)

| | Example | | | | | | | | | |
|---|---|---|---|---|---|---|---|---|---|---|
| | 1 | 2 | 3 | 4 | 5 | 6 | 7* | 8 | 9 | 10 |
| Compounding amount (part by mass) | | | | | | | | | | |
| Carbon black | 25 | 25 | 25 | 15 | 15 | 25 | 25 | 25 | 25 | 25 |
| Silica | 15 | 15 | 30 | 30 | 30 | 15 | 15 | 15 | 15 | 15 |
| Coupling agent | 1.5 | 1.5 | 2.0 | 2.0 | 2.0 | 1.5 | 1.5 | 1.5 | 1.5 | 1.5 |
| Thermoplastic resin 1 | 10 | - | 10 | 15 | - | 15 | 6.0 | 15 | 15 | 15 |
| Thermoplastic resin 2 | 5.0 | 15 | 5.0 | - | 15 | - | 3.0 | - | - | - |
| Thermosetting resin | 5.0 | 5.0 | - | 5.0 | 5.0 | 5.0 | 5.0 | 5.0 | 5.0 | 5.0 |
| Wax | 1.0 | 1.0 | 1.0 | 1.0 | 1.0 | 1.0 | 1.0 | 1.0 | 1.0 | 1.0 |
| Antioxidant 1 | 3.0 | 3.0 | 3.0 | 3.0 | 3.0 | 3.0 | 3.0 | 3.0 | 3.0 | 3.0 |
| Antioxidant 2 | 1.0 | 1.0 | 1.0 | 1.0 | 1.0 | 1.0 | 1.0 | 1.0 | 1.0 | 1.0 |
| Zinc oxide | 3.0 | 3.0 | 3.0 | 3.0 | 3.0 | 3.0 | 3.0 | 3.0 | 3.0 | 3.0 |
| Stearic acid | 2.5 | 2.5 | 2.5 | 2.5 | 2.5 | 2.5 | 2.5 | 2.5 | 2.5 | 2.5 |
| Oil | 10 | 15 | 25 | 15 | 15 | 15 | 15 | 25 | 15 | 15 |
| Sulfur | 1.5 | 1.5 | 1.5 | 1.5 | 1.5 | 1.5 | 1.5 | 1.5 | 1.5 | 1.5 |
| Vulcanization accelerator 1 | 1.0 | 1.0 | 1.0 | 1.0 | 1.0 | 1.0 | 1.0 | 1.0 | 1.0 | 1.0 |
| Vulcanization accelerator 2 | 0.5 | 0.5 | 1.0 | 0.5 | 0.5 | 0.5 | 0.5 | 0.5 | 0.5 | 0.5 |
| Vulcanization accelerator 3 | 0.5 | 0.5 | - | 0.5 | 0.5 | 0.5 | 0.5 | 0.5 | 0.5 | 0.5 |
| Crack growth rate at 250% strain (m/s) | 0.20 | 0.07 | 0.04 | 0 | 0 | 0.07 | 0.11 | 0.06 | 0.17 | 0.06 |
| Crack growth rate at 300% strain (m/s) | 0.25 | 0.15 | 0.07 | 0.01 | 0.01 | 0.12 | 0.18 | 0.11 | 0.24 | 0.10 |
| 70°C tan $\delta$ | 0.110 | 0.105 | 0.123 | 0.136 | 0.131 | 0.116 | 0.104 | 0.126 | 0.112 | 0.110 |
| Total styrene amount S (% by mass) | 4.1 | 5.9 | 8.3 | 15.8 | 15.8 | 5.9 | 5.9 | 5.5 | 0.0 | 15.8 |
| Total content of thermoplastic resin $R_1$ | 15 | 15 | 15 | 15 | 15 | 15 | 9 | 15 | 15 | 15 |
| Total content of thermosetting resin $R_2$ | 5.0 | 5.0 | 0 | 5 | 5 | 5 | 5 | 5 | 5 | 5 |
| $R_2/R_1$ | 0.33 | 0.33 | 0 | 0.33 | 0.33 | 0.33 | 0.556 | 0.33 | 0.33 | 0.33 |
| Thickness of surface layer rubber T (mm) | 2.0 | 2.0 | 2.0 | 2.0 | 2.0 | 2.0 | 2.0 | 2.0 | 2.0 | 2.0 |
| S/T | 2.1 | 3.0 | 4.1 | 7.9 | 7.9 | 3.0 | 3.0 | 2.8 | 0.0 | 7.9 |
| $R_1/T$ | 7.5 | 7.5 | 7.5 | 7.5 | 7.5 | 7.5 | 4.5 | 7.5 | 7.5 | 7.5 |

(continued)

| | Example | | | | | | | | | |
|---|---|---|---|---|---|---|---|---|---|---|
| | 1 | 2 | 3 | 4 | 5 | 6 | 7* | 8 | 9 | 10 |
| Compounding amount (part by mass) | | | | | | | | | | |
| Maximum load capacity of tire $W_L$ (kg) | 580 | 580 | 580 | 580 | 580 | 580 | 580 | 580 | 580 | 580 |
| Tire weight G (kg) | 8.5 | 8.5 | 8.5 | 8.5 | 8.5 | 8.5 | 8.5 | 8.5 | 8.5 | 8.5 |
| $G/W_L$ | 0.0147 | 0.0147 | 0.0147 | 0.0147 | 0.0147 | 0.0147 | 0.0147 | 0.0147 | 0.0147 | 0.0147 |
| High-speed durability index | 115 | 132 | 145 | 154 | 155 | 136 | 127 | 138 | 117 | 139 |

*Example 7 is not according to the invention defined by claim 1.

| | Example | | | | | | | Comparative example | | |
|---|---|---|---|---|---|---|---|---|---|---|
| | 11 | 12 | 13 | 14 | 15 | 16 | 17 | 1 | 2 | 3 |
| Compounding amount (part by mass) | | | | | | | | | | |
| NR | 45 | 45 | 45 | 45 | 45 | 45 | 45 | 100 | 100 | 40 |
| SBR1 | - | - | - | - | - | - | - | - | - | 30 |
| SBR2 | 16.5 | 16.5 | 16.5 | 16.5 | 16.5 | 16.5 | 16.5 | - | - | - |
| (Solid rubber content) | (15) | (15) | (15) | (15) | (15) | (15) | (15) | - | - | - |
| BR | 40 | 40 | 40 | 40 | 40 | 40 | 40 | - | - | 30 |
| Carbon black | 40 | 60 | 5 | 25 | 30 | 25 | 25 | 25 | 25 | 25 |
| Silica | - | 15 | 45 | 30 | 25 | 15 | 15 | 15 | 15 | 15 |
| Coupling agent | - | 1.5 | 4.5 | 2.0 | 2.0 | 1.5 | 1.5 | 1.5 | 1.5 | 1.5 |
| Thermoplastic resin 1 | 15 | 15 | 15 | 15 | 15 | 15 | 15 | 15 | - | - |
| Thermoplastic resin 2 | - | - | - | - | - | - | - | - | - | - |
| Thermosetting resin | 5.0 | 5.0 | 5.0 | 5.0 | 5.0 | 5.0 | 5.0 | 5.0 | - | 5.0 |
| Wax | 1.0 | 1.0 | 1.0 | 1.0 | 1.0 | 1.0 | 1.0 | 1.0 | 1.0 | 1.0 |
| Antioxidant 1 | 3.0 | 3.0 | 3.0 | 3.0 | 3.0 | 3.0 | 3.0 | 3.0 | 3.0 | 3.0 |
| Antioxidant 2 | 1.0 | 1.0 | 1.0 | 1.0 | 1.0 | 1.0 | 1.0 | 1.0 | 1.0 | 1.0 |
| Zinc oxide | 3.0 | 3.0 | 3.0 | 3.0 | 3.0 | 3.0 | 3.0 | 3.0 | 3.0 | 3.0 |
| Stearic acid | 2.5 | 2.5 | 2.5 | 2.5 | 2.5 | 2.5 | 2.5 | 2.5 | 2.5 | 2.5 |
| Oil | 15 | 15 | 15 | 15 | 15 | 15 | 15 | 15 | 15 | 15 |
| Sulfur | 1.5 | 1.5 | 1.5 | 1.5 | 1.5 | 1.5 | 1.5 | 1.5 | 1.5 | 1.5 |
| Vulcanization accelerator 1 | 1.0 | 1.0 | 1.0 | 1.0 | 1.0 | 1.0 | 1.0 | 1.0 | 1.0 | 1.0 |
| Vulcanization accelerator 2 | 0.5 | 0.5 | 0.5 | 0.5 | 0.5 | 0.5 | 0.5 | 0.5 | 0.5 | 0.5 |
| Vulcanization accelerator 3 | 0.5 | 0.5 | 0.5 | 0.5 | 0.5 | 0.5 | 0.5 | 0.5 | - | 0.5 |
| Crack growth rate at 250% strain (m/s) | 0.20 | 0.03 | 0 | 0 | 0 | 0.07 | 0.07 | 0.25 | 0.32 | 0.30 |

(continued)

|  | Example | | | | | | | Comparative example | | |
| --- | --- | --- | --- | --- | --- | --- | --- | --- | --- | --- |
|  | 11 | 12 | 13 | 14 | 15 | 16 | 17 | 1 | 2 | 3 |
| Compounding amount (part by mass) | | | | | | | | | | |
| Crack growth rate at 300% strain (m/s) | 0.28 | 0.08 | 0.01 | 0.03 | 0.04 | 0.15 | 0.15 | 0.34 | 0.48 | 0.48 |
| 70°C tan $\delta$ | 0.114 | 0.161 | 0.152 | 0.145 | 0.143 | 0.116 | 0.116 | 0.135 | 0.084 | 0.102 |
| Total styrene amount S (% by mass) | 5.9 | 5.9 | 5.9 | 5.9 | 5.9 | 5.9 | 5.9 | 0 | 0 | 8.3 |

|  | Example | | | | | | | Comparative example | | |
| --- | --- | --- | --- | --- | --- | --- | --- | --- | --- | --- |
|  | 11 | 12 | 13 | 14 | 15 | 16 | 17 | 1 | 2 | 3 |
| Total content of thermoplastic resin $R_1$ | 15 | 15 | 15 | 15 | 15 | 15 | 15 | 15 | 0 | 0 |
| Total content of thermosetting resin $R_2$ | 5.0 | 5.0 | 5.0 | 5.0 | 5.0 | 5 | 5 | 5 | 0 | 5 |
| $R_2/R_1$ | 0.33 | 0.33 | 0.33 | 0.33 | 0.33 | 0.33 | 0.33 | 0.33 | - | - |
| Thickness of surface layer rubber T (mm) | 2.0 | 2.0 | 2.0 | 2.0 | 2.0 | 6.0 | 2.0 | 2.0 | 2.0 | 2.0 |
| S/T | 3.0 | 3.0 | 3.0 | 3.0 | 3.0 | 1.0 | 3.0 | 0 | 0 | 4.1 |
| $R_1/T$ | 7.5 | 7.5 | 7.5 | 7.5 | 7.5 | 2.5 | 7.5 | 7.5 | 0 | 0 |
| Maximum load capacity of tire $W_L$ (kg) | 580 | 580 | 580 | 580 | 580 | 580 | 615 | 580 | 580 | 580 |
| Tire weight G (kg) | 8.5 | 8.5 | 8.5 | 8.5 | 8.5 | 8.5 | 8.1 | 8.5 | 8.5 | 8.5 |
| $G/W_L$ | 0.0147 | 0.0147 | 0.0147 | 0.0147 | 0.0147 | 0.0147 | 0.0132 | 0.0147 | 0.0147 | 0.0147 |
| High-speed durability index | 111 | 142 | 154 | 151 | 150 | 150 | 116 | 100 | 78 | 77 |

REFERENCE SIGNS LIST

1. Tread
2. Belt
3. Band
21. Bead core
22. Bead apex
23. Rim cushion
24. Clinch apex
25. Strip apex
31. Sidewall
32. Inner liner
33. Carcass
CL. Tire equator

T. Thickness of surface rubber layer at tire maximum width position
PW. Tire maximum width position

**Claims**

1. A rubber composition for sidewall, comprising a rubber component and a thermoplastic resin,

   wherein the rubber component comprises a styrene-butadiene rubber and/or a butadiene rubber,
   wherein an amount of a cis-1,4-bond butadiene unit in a total amount of the rubber component is 80.0% by mass or less,
   wherein a total content $R_1$ (part by mass) of the thermoplastic resin based on 100 parts by mass of the rubber component is more than 10 parts by mass and less than 30 parts by mass, and
   wherein a crack growth rate measured under a test condition satisfies at least one of
   0.20 m/s or less in a case of 250% strain (constant strain) of a test piece when fixed, and
   0.30 m/s or less in a case of 300% strain (constant strain) of a test piece when fixed,
   The test condition:

   Test piece: a pure shear specimen with a vertical side of 22.4 mm, a horizontal side of 150.0 mm, and a thickness of 1.0 mm;
   Test method: a biaxial tensile test is performed on the test piece parallel to a longitudinal direction, and then the test piece is fixed, in which a 10.0 mm of cut is made parallel to a horizontal direction starting from a midpoint of the vertical side on one side of the test piece.

2. The rubber composition for sidewall of claim 1, further comprising a filler, wherein the filler comprises silica.

3. The rubber composition for sidewall of claim 2, wherein a total content of the filler based on 100 parts by mass of the rubber component is less than 50 parts by mass, preferably 45 parts by mass more preferably, 42 parts by mass.

4. The rubber composition for sidewall of any one of claims 1 to 3, wherein a tan $\delta$ at 70°C of the rubber composition is 0.15 or less, preferably 0.14 or less, more preferably 0.13 or less, more preferably 0.12 or less, when measured as defined in the description.

5. The rubber composition for sidewall of any one of claims 1 to 4 wherein a total content $R_1$ (part by mass) of the thermoplastic resin based on 100 parts by mass of the rubber component is more than 12 parts by mass and less than 25 parts.

6. The rubber composition for sidewall of any one of claims 1 to 5, wherein a total styrene amount S (% by mass) of the rubber component is less than 15% by mass, preferably less than 10% by mass, more preferably less than 8% by mass, more preferably less than 6% by mass.

7. The rubber composition for sidewall of any one of claims 1 to 6, wherein the rubber component further comprises an isoprene-based rubber.

8. The rubber composition for sidewall of any one of claims 1 to 7, wherein the thermoplastic resin comprises at least one or more selected from a group consisting of a terpene resin and a petroleum resin.

9. The rubber composition for sidewall of any one of claims 1 to 8, further comprising a thermosetting resin.

10. The rubber composition for sidewall of any one of claims 1 to 9, wherein, when a total content of the thermosetting resin based on 100 parts by mass of the rubber component is defined as $R_2$ (part by mass), a ratio $R_2/R_1$ of the total content $R_2$ to the total content $R_1$ (parts by mass) of the thermoplastic resin based on 100 parts by mass of the rubber component is 0.20 or more and 0.50 or less.

11. A tire comprising a sidewall composed of the rubber composition of any one of claims 1 to 10.

12. The tire of claim 11, wherein, when a thickness of a surface rubber layer at a tire maximum width position is defined as T (mm), $R_1/T$ is 3.0 or more and 9.0 or less.

**13.** The tire of claim 11 or 12, wherein, when a thickness of a surface rubber layer at a tire maximum width position is defined as T (mm), S/T is 1.0 or more and 9.0 or less.

**14.** The tire of any one of claims 11 to 13, wherein a ratio ($G/W_L$) of a tire weight G (kg) to the maximum load capacity $W_L$ (kg) of the tire is 0.0210 or less, preferably 0.0200 or less, more preferably 0.0180 or less, more preferably 0.0160 or less, more preferably 0.0150 or less.

**15.** The tire of any one of claims 11 to 14, wherein the tire is a tire for a passenger car.

**Patentansprüche**

**1.** Kautschukzusammensetzung für eine Seitenwand, umfassend eine Kautschukkomponente und ein thermoplastisches Harz,

wobei die Kautschukkomponente einen Styrol-Butadien-Kautschuk und/oder einen Butadien-Kautschuk umfasst,
wobei eine Menge einer cis-1,4-Bindungs-Butadieneinheit in einer Gesamtmenge der Kautschukkomponente 80,0 Massen-% oder weniger beträgt,
wobei ein gesamter Gehalt $R_1$ (Massenteile) des thermoplastischen Harzes, bezogen auf 100 Massenteile der Kautschukkomponente, mehr als 10 Massenteile und weniger als 30 Massenteile beträgt, und
wobei eine Risswachstumsrate, gemessen unter Prüfbedingungen, mindestens eines erfüllt von
0,20 m/s oder weniger in einem Fall von 250% Dehnung (konstante Dehnung) eines Prüfkörpers, wenn fixiert, und
0,30 m/s oder weniger in einem Fall von 300% Dehnung (konstante Dehnung) eines Prüfkörpers, wenn fixiert,
Die Prüfbedingungen:

Prüfkörper: eine reine Scherprobe mit einer vertikalen Seite von 22,4 mm, einer horizontalen Seite von 150,0 mm und einer Dicke von 1,0 mm;
Prüfverfahren: eine biaxiale Zugprüfung wird an dem Prüfkörper parallel zu einer Längsrichtung durchgeführt, und daraufhin wird der Prüfkörper fixiert, in welchem ein Schnitt von 10,0 mm parallel zu einer Horizontalrichtung ausgehend von einem Mittelpunkt der vertikalen Seite auf einer Seite des Prüfkörpers vorgenommen wird.

**2.** Kautschukzusammensetzung für eine Seitenwand nach Anspruch 1, zudem umfassend einen Füllstoff, wobei der Füllstoff Siliciumdioxid umfasst.

**3.** Kautschukzusammensetzung für eine Seitenwand nach Anspruch 2, wobei ein gesamter Gehalt des Füllstoffes, bezogen auf 100 Massenteile der Kautschukkomponente, weniger als 50 Massenteile, bevorzugt 45 Massenteile, bevorzugter 42 Massenteile beträgt.

**4.** Kautschukzusammensetzung für eine Seitenwand nach einem der Ansprüche 1 bis 3, wobei ein tan δ bei 70°C der Kautschukzusammensetzung 0,15 oder weniger, bevorzugt 0,14 oder weniger, bevorzugter 0,13 oder weniger, bevorzugter 0,12 oder weniger beträgt, wenn gemessen wie in der Beschreibung definiert.

**5.** Kautschukzusammensetzung für eine Seitenwand nach einem der Ansprüche 1 bis 4, wobei ein gesamter Gehalt $R_1$ (Massenteile) des thermoplastischen Harzes, bezogen auf 100 Massenteile der Kautschukkomponente, mehr als 12 Massenteile und weniger als 25 Massenteile beträgt.

**6.** Kautschukzusammensetzung für eine Seitenwand nach einem der Ansprüche 1 bis 5, wobei eine gesamte Styrolmenge S (Massen-%) der Kautschukkomponente weniger als 15 Massen-%, bevorzugt weniger als 10 Massen-%, bevorzugter weniger als 8 Massen-%, bevorzugter weniger als 6 Massen-% beträgt.

**7.** Kautschukzusammensetzung für eine Seitenwand nach einem der Ansprüche 1 bis 6, wobei die Kautschukkomponente zudem einen Isoprenbasierten Kautschuk umfasst.

**8.** Kautschukzusammensetzung für eine Seitenwand nach einem der Ansprüche 1 bis 7, wobei das thermoplastische Harz mindestens eines oder mehr umfasst, welches ausgewählt ist aus einer Gruppe bestehend aus einem Terpenharz und einem Petrolharz.

9. Kautschukzusammensetzung für eine Seitenwand nach einem der Ansprüche 1 bis 8, zudem umfassend ein wärmehärtendes Harz.

10. Kautschukzusammensetzung für eine Seitenwand nach einem der Ansprüche 1 bis 9, wobei, wenn ein gesamter Gehalt des wärmehärtenden Harzes, bezogen auf 100 Massenteile der Kautschukkomponente, als $R_2$ (Massenteile) definiert ist, ein Verhältnis $R_2/R_1$ des gesamten Gehalts $R_2$ zum gesamten Gehalt $R_1$ (Massenteile) des thermoplastischen Harzes, bezogen auf 100 Massenteile der Kautschukkomponente, 0,20 oder mehr und 0,50 oder weniger beträgt.

11. Reifen, umfassend eine Seitenwand, die mit der Kautschukzusammensetzung nach einem der Ansprüche 1 bis 10 aufgebaut ist.

12. Reifen nach Anspruch 11, wobei, wenn eine Dicke einer Oberflächenkautschukschicht an einer Position maximaler Reifenbreite als T (mm) definiert ist, $R_1/T$ 3,0 oder mehr und 9,0 oder weniger beträgt.

13. Reifen nach Anspruch 11 oder 12, wobei, wenn eine Dicke einer Oberflächenkautschukschicht an einer Position maximaler Reifenbreite als T (mm) definiert ist, S/T 1,0 oder mehr und 9,0 oder weniger beträgt.

14. Reifen nach einem der Ansprüche 11 bis 13, wobei ein Verhältnis ($G/W_L$) eines Reifengewichts G (kg) zur maximalen Tragfähigkeit $W_L$ (kg) des Reifens 0,0210 oder weniger, bevorzugt 0,0200 oder weniger, bevorzugter 0,0180 oder weniger, bevorzugter 0,0160 oder weniger, bevorzugter 0,0150 oder weniger beträgt.

15. Reifen nach einem der Ansprüche 11 bis 14, wobei der Reifen ein Reifen für einen Personenkraftwagen ist.

**Revendications**

1. Composition de caoutchouc pour une paroi latérale, comprenant un composant de caoutchouc et une résine thermoplastique,

dans laquelle le composant de caoutchouc comprend un caoutchouc styrène butadiène et/ou un caoutchouc butadiène,
dans laquelle une quantité d'une unité de butadiène à liaison cis 1,4 dans une quantité totale du composant de caoutchouc est de 80,0 % en masse ou moins,
dans laquelle une teneur totale $R_1$ (part en masse) de la résine thermoplastique sur la base de 100 parts en masse du composant de caoutchouc est supérieure à 10 parts en masse et inférieure à 30 parts en masse, et
dans laquelle une vitesse de croissance de fissures mesurée sous une condition d'essai satisfait à l'une au moins des conditions suivantes :

0,20 m/s ou moins dans un cas d'une contrainte de 250 % (contrainte constante) d'une pièce d'essai quand elle est fixée, et
0,30 m/s ou moins dans un cas d'une contrainte de 300 % (contrainte constante) d'une pièce d'essai quand elle est fixée,

la condition d'essai étant la suivante :

pièce d'essai : éprouvette de cisaillement pur avec un côté vertical de 22,4 mm, un côté horizontal de 150,0 mm, et une épaisseur de 1,0 mm ;
méthode d'essai : un essai en traction biaxiale est effectué sur la pièce d'essai parallèlement à une direction longitudinale, et puis la pièce d'essai est fixée, dans laquelle une découpe de 10,0 mm est réalisée parallèlement à une direction horizontale en partant depuis un point médian du côté vertical sur un côté de la pièce d'essai.

2. Composition de caoutchouc pour une paroi latérale selon la revendication 1, comprenant en outre une charge, dans lequel la charge comprend une silice.

3. Composition de caoutchouc pour une paroi latérale selon la revendication 2, dans laquelle une teneur totale de la charge sur la base de 100 parts en masse du composant de caoutchouc est inférieure à 50 parts en masse, de préférence 45 parts en masse, de manière encore préférée, 42 parts en masse.

4. Composition de caoutchouc pour une paroi latérale selon l'une quelconque des revendications 1 à 3, dans laquelle une valeur tan $\delta$ à 70 °C de la composition de caoutchouc est de 0,15 ou moins, de préférence 0,14 ou moins, de manière préférée 0,13 ou moins, de manière encore préférée 0,12 ou moins, quand elle est mesurée comme défini dans la description.

5. Composition de caoutchouc pour une paroi latérale selon l'une quelconque des revendications 1 à 4, dans laquelle une teneur totale $R_1$ (part en masse) de la résine thermoplastique sur la base de 100 parts en masse du composant de caoutchouc est supérieure à 12 parts en masse et inférieure à 25 parts.

6. Composition de caoutchouc pour une paroi latérale selon l'une quelconque des revendications 1 à 5, dans laquelle une quantité totale de styrène S (% en masse) du composant de caoutchouc est inférieure à 15 % en masse, de préférence inférieure à 10 % en masse, de manière préférée inférieure à 8 % en masse, de manière encore préférée inférieure à 6 % en masse.

7. Composition de caoutchouc pour une paroi latérale selon l'une quelconque des revendications 1 à 6, dans laquelle le composant de caoutchouc comprend en outre un caoutchouc à base d'isoprène.

8. Composition de caoutchouc pour une paroi latérale selon l'une quelconque des revendications 1 à 7, dans laquelle la résine thermoplastique comprend au moins une ou plusieurs résines sélectionnées parmi un groupe constitué de : résine de terpène et résine de pétrole.

9. Composition de caoutchouc pour une paroi latérale selon l'une quelconque des revendications 1 à 8, comprenant en outre une résine thermodurcissable.

10. Composition de caoutchouc pour une paroi latérale selon l'une quelconque des revendications 1 à 9, dans laquelle, quand une teneur totale de la résine thermodurcissable sur la base de 100 parts en masse du composant de caoutchouc est définie comme $R_2$ (part en masse), un rapport $R_2/R_1$ de la teneur totale $R_2$ sur la teneur totale $R_1$ (parts en masse) de la résine thermoplastique sur la base de 100 parts en masse du composant de caoutchouc est de 0,20 ou plus et de 0,50 ou moins.

11. Pneumatique comprenant une paroi latérale composée de la composition de caoutchouc selon l'une quelconque des revendications 1 à 10.

12. Pneumatique selon la revendication 11, dans lequel, quand une épaisseur d'une couche de caoutchouc de surface à une position de largeur maximum du pneumatique est définie comme T (mm), $R_1/T$ est de 3,0 ou plus et de 9,0 ou moins.

13. Pneumatique selon la revendication 11 ou 12, dans lequel, quand une épaisseur d'une couche de caoutchouc de surface à une position de largeur maximum du pneumatique est définie comme T (mm), S/T est de 1,0 ou plus et de 9,0 ou moins.

14. Pneumatique selon l'une quelconque des revendications 11 à 13, dans lequel un rapport $(G/W_L)$ d'un poids de pneumatique G (kg) sur une capacité de charge maximum $W_L$ (kg) du pneumatique est de 0,0210 moins, de préférence 0,0200 ou moins, de manière préférée 0,0180 ou moins, de manière encore préférée 0,0160 ou moins, de toute préférence de 0,0150 ou moins.

15. Pneumatique selon l'une quelconque des revendications 11 à 14, dans lequel le pneumatique est un pneumatique pour une voiture particulière.

# FIG.2

# FIG.3

**EP 4 230 693 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018109126 A